# EUROPÄISCHE PATENTSCHRIFT

(11) **EP 3 455 931 B1**
(45) Veröffentlichungstag und Bekanntmachung des Hinweises auf die Patenterteilung: **04.03.2020**
(21) Anmeldenummer: 17723263.4
(22) Anmeldetag: 03.05.2017
(51) Int. Cl.: H02M 1/32, H02M 5/458, H02H 6/00, H02M 7/53, H02P 3/12, H02P 3/22, H02P 29/68, B60L 7/02

(54) **UMRICHTERSYSTEM MIT EINEM AC/DC-WANDLER UND VERFAHREN ZUM BETREIBEN EINES UMRICHTERSYSTEMS**
CONVERTER SYSTEM COMPRISING AN AC/DC CONVERTER AND METHOD FOR OPERATING A CONVERTER SYSTEM
SYSTÈME DE CONVERTISSEURS COMPORTANT UN CONVERTISSEUR ALTERNATIF/CONTINU ET PROCÉDÉ DE FONCTIONNEMENT D'UN SYSTÈME DE CONVERTISSEURS

(30) Priorität: 13.05.2016 DE 102016005795
(43) Veröffentlichungstag der Anmeldung: 20.03.2019
(73) Patentinhaber: SEW-EURODRIVE GmbH & Co. KG, 76646 Bruchsal (DE)
(72) Erfinder: STARK, Marcel, D-74909 Meckesheim (DE)
(86) Internationale Anmeldenummer: PCT/EP2017/025102
(87) Internationale Veröffentlichungsnummer: WO 2017/194196

(56) Entgegenhaltungen:
- EP-A2- 2 797 219
- WO-A1-2011/104285
- DE-A1-102007 018 829
- JP-A- H10 225 158
- JP-A- 2003 333 873
- US-A1- 2014 191 693

## Beschreibung

Die Erfindung betrifft ein Umrichtersystem mit einem AC/DC-Wandler und Verfahren zum Betreiben eines Umrichtersystems.

Es ist allgemein bekannt, dass ein Umrichter einen netzversorgten Gleichrichter aufweist, welcher einen Wechselrichter speist.

**Aus der** JP2003 333873 A **ist als nächstliegender Stand der Technik ein Umrichtersystem bekannt.**

**Aus der** JP H10 225158 A **ist ein Verfahren zum Schutz eines Bremswiderstandes bekannt.**

**Aus der** WO 2011/104285 A1 **ist ein Verfahren zum Ausgleichen von Schwankungen der Wirkleistungsabgabe bei einem Umrichtersystem bekannt.**

**Aus der** DE 10 2007 018829 A1 **ist eine Vorrichtung zur Ansteuerung einer Leistungsschaltereinheit bekannt.**

**Aus der** US 2014/191693 A1 **ist ein Leistungswandler bekannt.**

**Aus der** EP 2 797 219 A2 **ist eine Vorrichtung zum selbstschützenden dynamischen Bremsen bekannt.**

Der Erfindung liegt daher die Aufgabe zugrunde, ein Umrichtersystem weiterzubilden, wobei die Sicherheit erhöht sein soll.

Erfindungsgemäß wird die Aufgabe bei dem Umrichtersystem nach den in Anspruch 1 und bei dem Verfahren nach den in Anspruch 6 angegebenen Merkmalen gelöst.

Wichtige Merkmale der Erfindung bei dem Umrichtersystem mit einem AC/DC-Wandler,
insbesondere Gleichrichter, dessen gleichspannungsseitiger Anschluss eine Reihenschaltung, aufweisend einen Bremswiderstand und einen steuerbaren Schalter, speist,
insbesondere wobei der Reihenschaltung der gleichspannungsseitige Anschluss eines DC/AC-Wandlers, insbesondere Wechselrichters, parallel zugeschaltet ist,
**wobei** das Ausgangssignal eines Spannungserfassungsmittels einer Auswerteeinheit zugeführt wird, welche ein Ansteuersignal für den steuerbaren Schalter erzeugt,
wobei die Auswerteeinheit ein Mittel zur Bestimmung der an den Bremswiderstand insbesondere aus dem Zwischenkreis zugeführten elektrischen Leistung umfasst,
insbesondere welche vom Mittel aus dem Ausgangssignal des Spannungserfassungsmittels bestimmt wird,
wobei das Ausgangssignal des Mittels einem Regler, insbesondere einem linearen Regler, zugeführt wird, wobei der Regler seinen Stellwert auf das Ausgangssignal des Mittels hin regelt,
insbesondere wobei der Regler ein lineares Reglerglied, insbesondere PI-Reglerglieds oder Integrierglied, aufweist, dessen Stellwert, also dessen Ausgangssignal, einem Differenzbildner zur Bestimmung der Differenz zwischen dem Stellwert und dem Wert der elektrischen Leistung zugeführt wird,
wobei der Stellwert direkt oder über einen Begrenzer einem parametrierbaren Filter zugeführt wird, dessen Ausgangssignal einem Schaltglied zugeführt wird,
insbesondere welches ein vom Überschreiten oder Unterschreiten eines Schwellwertes abhängiges Ausgangssignal zum Öffnen oder Schließen des steuerbaren Schalters erzeugt.

Von Vorteil ist dabei, dass die Sicherheit erhöht ist, da der Temperaturverlauf am Bremswiderstand modelliert wird mittels des Reglers mit nachgeschaltetem parametrierbarem Filter. Somit ist bei Überschreiten eines Schwellwertes an Temperatur ein Abschalten ausführbar. Dabei ist die Modellierung sehr einfach ausgeführt. Der erfasste Wert des Stromes im Zwischenkreis oder der Spannung im Zwischenkreis wird quadriert und einer Integration unterworfen, wobei das Ergebnis einem parametrierbaren Filter zugeführt wird. Somit ist die Modellbildung derart ausgeführt, dass das Ausgangssignal dem realen Temperaturwert am Bremswiderstand zumindest qualitativ folgt. Auf diese Weise ist eine direkte Messung der Temperatur des Bremswiderstandes entbehrlich. Die Integration wird nur für den Zeitraum des geschlossenen Zustandes des Schalters ausgeführt.

Bei einer vorteilhaften Ausgestaltung ist der AC/DC-Wandler ein steuerbarer Gleichrichter. Von Vorteil ist dabei, dass die Zuführung von elektrischer Leistung in einfacher Weise verhinderbar ist.

Bei einer vorteilhaften Ausgestaltung wird zur Bestimmung der an den Bremswiderstand zugeführten elektrischen Leistung das Ausgangssignal einem Quadrierungsmittel für die Zeitspanne des geschlossenen Zustands des steuerbaren Schalters zugeführt, dessen Ausgangssignal einem Mittel zur Multiplikation mit einem Widerstandswert des Bremswiderstands zugeführt wird. Von Vorteil ist dabei, dass eine einfache Bestimmung der elektrischen Leistung aus der erfassen Spannung ausführbar ist.

Bei einer vorteilhaften Ausgestaltung werden zur Bestimmung der an den Bremswiderstand zugeführten elektrischen Leistung das Ausgangssignal des Spannungserfassungsmittels oder das Ausgangssignal eines Stromerfassungsmittel, welches den im Zwischenkreis fließenden Strom erfasst, für die Zeitspanne des geschlossenen Zustands des steuerbaren Schalters einem Mittel zugeführt, dessen Ausgangssignal dem Produkt der Ausgangssignale des Spannungserfassungsmittel und des Stromerfassungsmittels entspricht, insbesondere also der elektrischen Leistung. Von Vorteil ist dabei, dass die elektrische Leistung durch Multiplikation von Zwischenkreisspannung und Zwischenkreisstrom bestimmbar ist oder durch Quadrieren des Zwischenkreisstroms und Multiplikation mit dem zugehörigen Widerstandswert oder durch Quadrieren der Zwischenkreisspannung und dividieren durch den zugehörigen Widerstandswert.

Bei einer vorteilhaften Ausgestaltung verschwindet für die Zeitspanne des geöffneten Zustands des steuerbaren Schalters das die elektrische Leistung darstellende Signal, insbesondere weist also den Wert Null auf. Von Vorteil ist dabei, dass die Integration der Leistung die in den Bremswiderstand eingetragene Energie ist

Bei einer vorteilhaften Ausgestaltung ist ein galvanisch entkoppeltes Stromerfassungsmittel, insbesondere Optokoppler, in der Reihenschaltung angeordnet,
dessen Ausgangssignal der Auswerteeinheit zugeführt wird, wobei ein Vergleichsmittel der Auswerteeinheit das Ausgangssignal auf unzulässig hohe Abweichungen zum zeitlichen Verlauf des für den steuerbaren Schalter vorgesehenen Ansteuersignals überwacht und davon abhängig eine Warnung oder einen Fehlerzustand anzeigt, meldet oder weiterleitet. Von Vorteil ist dabei, dass eine erhöhte Sicherheit erreichbar ist, indem das Ansteuersignal mit dem erfassten Stromsignal vergleichbar ist. Über das Rückmeldesignal ist erkennbar, ob ein interner oder ein externer Widerstand vorhanden ist.

Wichtige Merkmale bei dem Verfahren zum Betreiben eines Umrichtersystems sind, dass
am gleichspannungsseitigen Anschluss eines AC/DC-Wandlers eine Reihenschaltung, umfassend einen steuerbaren Schalter und einen Bremswiderstand, angeschlossen ist und parallel hierzu der gleichspannungsseitige Anschluss eines DC/AC-Wandlers,
wobei aus der am gleichspannungsseitigen Anschluss des DC/AC-Wandlers oder AC/DC-Wandlers erfassten Spannung die an den Bremswiderstand bei geschlossenem steuerbaren Schalter abgeführte elektrische Leistung bestimmt wird, wobei bei geöffnetem steuerbaren Schalter die an den Bremswiderstand abgeführte elektrische Leistung verschwindet,
wobei der zeitliche Verlauf der an den Bremswiderstand abgeführten elektrischen Leistung einem Regler, insbesondere linearen Regler, zugeführt wird, der seinen Stellwert, insbesondere also sein Ausgangssignal, auf den zeitlichen Verlauf der an den Bremswiderstand abgeführten elektrischen Leistung hinregelt,
wobei der Stellwert des Reglers direkt oder über einen Begrenzer einem parametrierbaren Filter zugeführt wird, dessen Ausgangssignal einem Schaltglied zugeführt wird, welches den steuerbaren Schalter ansteuert, insbesondere abhängig vom Überschreiten oder Unterschreiten eines Schwellwertes durch den Stellwert.

Von Vorteil ist dabei, dass eine einfache Überwachung auf Übertemperatur des Bremswiderstands ausführbar ist, indem der Temperaturverlauf modelliert wird und keine direkte Erfassung notwendig ist.

Bei einer vorteilhaften Ausgestaltung wird das vom Schaltglied erzeugte Ansteuersignal auf unzulässig hohe Abweichungen vom in der Reihenschaltung, insbesondere im Bremswiderstand, erfassten Rückmeldesignal verglichen. Von Vorteil ist dabei, dass eine einfache Überwachung ausführbar ist. Beispielsweise ist somit eine Durchlegierung oder die Verwendung eines internen oder externen Bremswiderstands erkennbar.

Bei einer vorteilhaften Ausgestaltung wird das Filter derart parametriert, dass der zeitliche Verlauf des Ausgangssignals dem realen Temperaturverlauf entspricht. Von Vorteil ist dabei, dass der Temperaturverlauf ohne direkt Temperaturerfassung am Bremswiderstand überwachbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erstes erfindungsgemäßes Umrichtersystem zur Versorgung eines Elektromotors 8, wobei im Umrichtersystem ein steuerbarer Schalter 13 und Bremswiderstand (2, 4) angeordnet ist.
In der Figur 2 ist ein zweites erfindungsgemäßes Umrichtersystem mit steuerbarem Schalter 13 und Bremswiderstand 2 gezeigt.
In der Figur 3 ist die Modellbildung für die Temperatur des Bremswiderstands (2, 4) schematisch skizziert.
In der Figur 4 sind beispielhafte Signalverläufe und zugehörige Schwellwerte dargestellt.
In der Figur 5 ist ein Ersatzschaltbild für die Wärmeleitung dargestellt, welches der Modellbildung zugrunde liegt.
In der Figur 6 ist ein beispielhafter Temperaturverlauf dargestellt, wobei der steuerbare Schalter 13 zum Zeitpunkt t = 0 dauerhaft eingeschaltet wird und somit die Temperatur des Bremswiderstandes 4 gegen den Temperaturwert 43 bei Dauerbetrieb konvergiert.

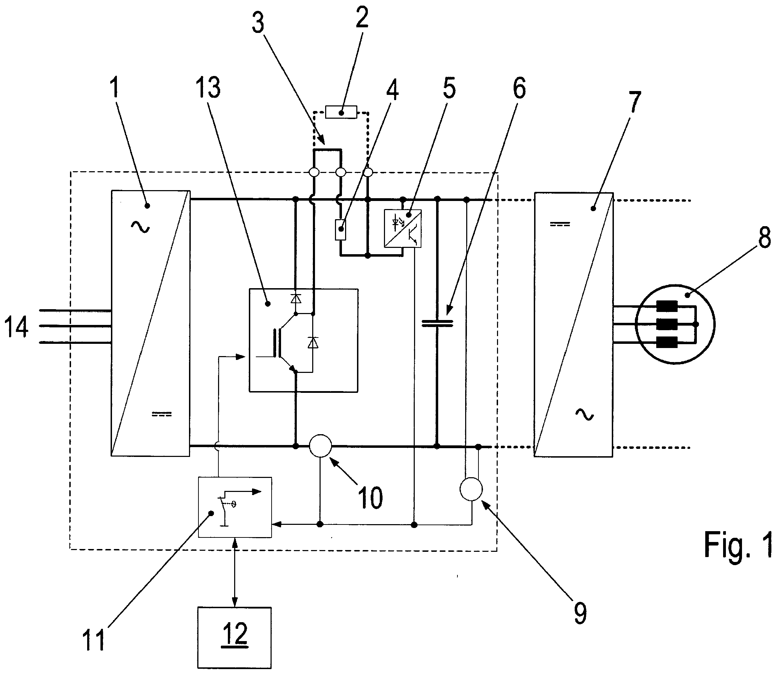

Wie in Figur 1 gezeigt, weist das Umrichtersystem einen an seinem wechselspannungsseitigen Anschluss von einem Wechselspannungsversorgungsnetz 14 versorgbaren AC/DC-Wandler 1, insbesondere steuerbarer Gleichrichter oder Wechselrichter, auf. Somit ist vom Wechselspannungsversorgungsnetz 14 entnommene elektrische Energie als Gleichspannung, also Zwischenkreisspannung, am gleichspannungsseitigen Anschluss des AC/DC-Wandlers 1 zur Verfügung stellbar.

An diesem gleichspannungsseitigen Anschluss ist eine Kapazität 6, insbesondere Zwischenkreiskondensator, angeschlossen und parallel hierzu ein Wechselrichter 7, insbesondere DC/AC-Wandler oder rückspeisefähiger DC/AC-Wandler, und eine Reihenschaltung, welche einen steuerbaren Schalter 13 und einen Bremswiderstand aufweist.

Der AC/DC-Wandler 1 sowie der Wechselrichter 7 sind innerhalb eines gemeinsamen Gehäuses angeordnet und sind somit ein Umrichter.

Als Bremswiderstand ist ein interner Bremswiderstand 4, also ein innerhalb des Gehäuses des Umrichters angeordneter Bremswiderstand, wirksam, wenn eine Brücke 3 an Anschlüssen des Umrichters entsprechend elektrisch verbunden ist, also zwei Kontakte des Umrichters elektrisch verbindet und somit den internen Bremswiderstand 4 mit seinem ersten Anschluss mit einem Potential der Zwischenkreisspannung verbindet und den anderen Anschluss des internen Bremswiderstands 4 mit einem Anschluss des steuerbaren Schalters 13.

Parallel zum internen Bremswiderstand 4 ist auch ein externer Bremswiderstand 2 mittels seines ersten Anschlusses mit dem Potential der Zwischenkreisspannung und mittels seines anderen Anschlusses mit dem anderen Anschluss des internen Bremswiderstands 4.

Parallel zum Bremswiderstand wird mittels des steuerbaren Schalters ein Leuchtmittel eines Optokopplers angesteuert. Dieses Leuchtmittel steuert zur Potentialtrennung einen lichtsensitiven Schalters, insbesondere Phototransistor. Das so bewirkte Sensorsignal wird einer Auswerteeinheit 11 zugeführt, welche ein Temperaturmodell für den internen oder externen Bremswiderstand berechnet und/oder welche auch die Ansteuersignale 41 für den steuerbaren Schalter 13 erzeugt oder freigibt. Wenn also dem steuerbaren Schalter 13 von der Auswerteeinheit 11 ein Ansteuersignal 41 zugeleitet wird und das Sensorsignal nicht innerhalb eines vorgegebenen Zeitfensters dem Ansteuersignal 41 nicht folgt, wird ein Fehlerzustand gemeldet.

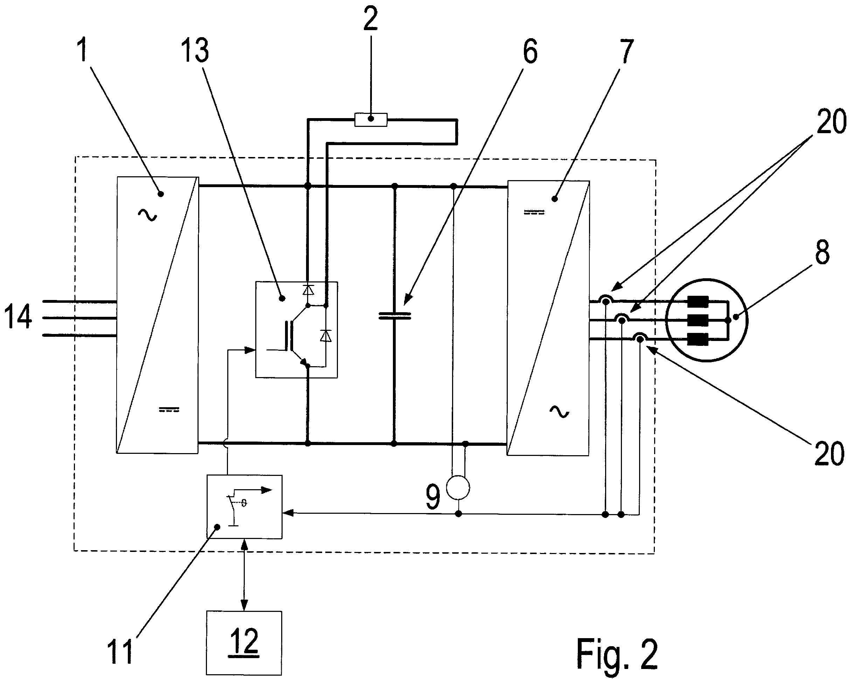

Der Auswerteeinheit 11 wird gemäß Figur 1 außerdem der von einem Spannungserfassungsmittel 9 erfasste Wert der Zwischenkreisspannung und der von einem Stromerfassungsmittel 10 erfasste Wert des im Zwischenkreis fließenden Stroms zugeführt. Somit ist bei Überschreiten eines Schwellwertes durch die Zwischenkreisspannung ein derartiges Ansteuersignal von der Auswerteeinheit 11 erzeugbar, dass der Schalter 13 geschlossen wird und somit Energie aus dem Zwischenkreis an den Bremswiderstand abgeführt wird. Auf diese Weise ist ein weiterer gegebenenfalls gefährlicher Anstieg der Zwischenkreisspannung verhinderbar. Alternativ dazu wird bei der Ausführung nach Figur 2 nur der mit dem Spannungserfassungsmittel 9 erfasste Wert der Auswerteeinheit 11 zugeführt.

Wie in den Figuren 1 und 2 gezeigt, wird das von dem Optokoppler 5 rückgemeldete Signal von der Auswerteeinheit 11 mit dem erzeugten Ansteuersignal verglichen und bei unzulässiger Abweichung, insbesondere auch unter Berücksichtigung eines zeitlichen Versatzes, wird ein Fehlerzustand gemeldet. Beispielsweise ist ein Durchlegieren des Schalters 13 erkennbar oder eine aufgetrennte elektrische Leitung.

Ob ein externer Bremswiderstand 2 elektrisch verbunden ist oder nicht, wird erkannt, indem ein Testimpuls erzeugt wird und dann der Stromverlauf überwacht und ausgewertet wird. Wenn hierzu der Testimpuls das Schließen des Schalters 13 für einen Zeitabschnitt bewirkt, steigt der Strom gemäß einem von dem Wert des Bremswiderstands bestimmten zeitlichen Verlaufs an. Somit ist das Vorhandensein eines externen Bremswiderstandes detektierbar.

In der Auswerteeinheit 11 wird außerdem der zeitliche Verlauf der Temperatur des Bremswiderstandes modelliert. Für diese Modellbildung wird entweder gemäß Figur 1 der Wert der erfassten Zwischenkreisspannung mit dem Wert des erfassten Stromes im Zwischenkreis multipliziert, um die jeweils aktuelle elektrische Leistung P(t) in derjenigen Zeitspanne zu erhalten, während welcher der Schalter 13 geöffnet ist, oder es wird gemäß Figur 2 aus der erfassten Zwischenkreisspannung, welche für die Zeitspanne des geschlossenen Schalters 13 am Bremswiderstand anliegt, die elektrische Leistung P(t) = U(t) ^{∗} U(t) / R bestimmt, wobei die Spannung U(t) die zum jeweiligen Zeitpunkt t der Zeitspanne am Bremswiderstand mit dem Ohmschen Wert R anliegende Zwischenkreisspannung ist.

Durch zeitliche Integration der so, also gemäß Figur 1 oder Figur 2, bestimmten elektrische Leistung P(t) ist die in den Bremswiderstand eingetragene Wärmemenge bestimmt.

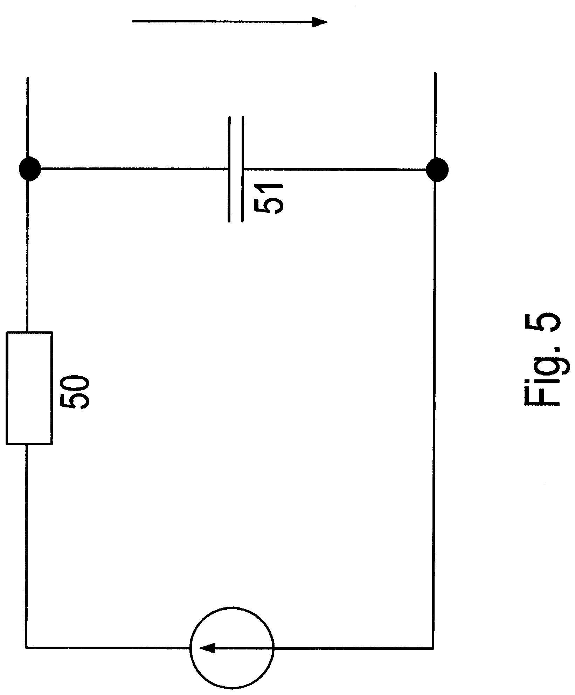

Das in Figur 5 gezeigte Wärmeersatzschaltbild liegt der Modellierung des Temperaturverlaufs in der Auswerteeinheit 11 zugrunde. Dabei wird also die Wärmekapazität 51 berücksichtigt und auch der Wärmeleitwiderstand 50 vom Bremswiderstand zur Umgebung hin.

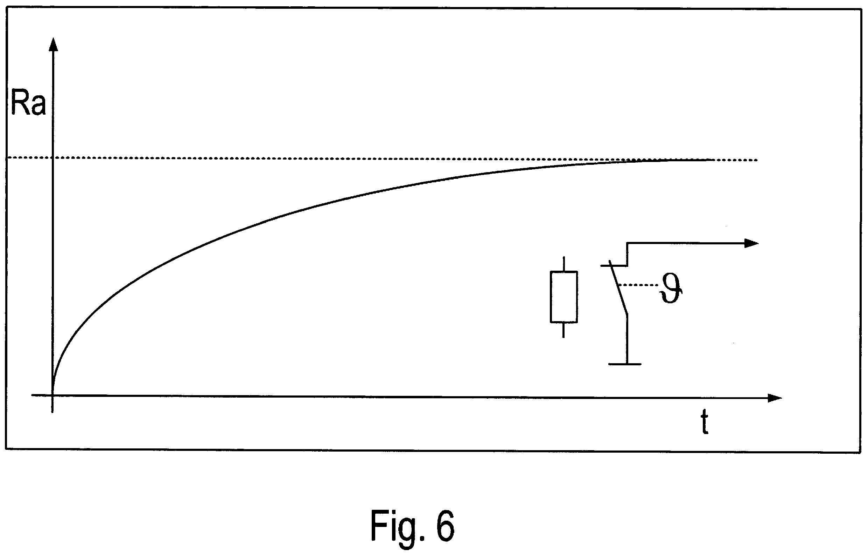

Figur 6 zeigt einen typischen Temperaturverlauf bei Schließen des Schalters 13.

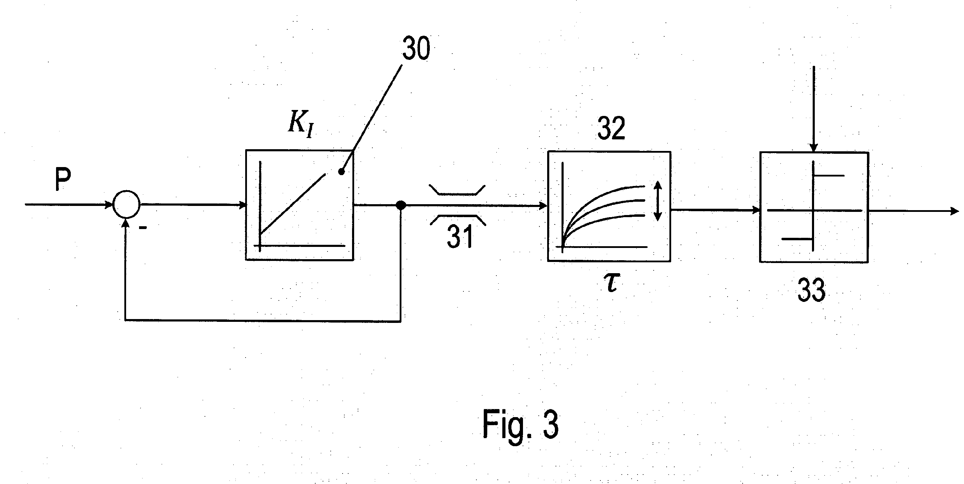

Wie in Figur 3 dargestellt, wird die bestimmte elektrische Leistung P(t) einem linearen Regler zugeführt, wobei die Differenz zwischen dem Stellwert eines linearen Reglerglieds 30 und der aktuell bestimmten elektrischen Leistung P(t) dem linearen Reglerglied 30 zugeführt wird.

Das lineare Reglerglied weist zumindest ein einen Integrierer aufweisendes Reglerglied auf.

Der Stellwert, also das Ausgangssignal des linearen Reglerglieds 30, wird über einen Begrenzer 31 einem parametrierbaren Filter 32 zugeführt, welches das abströmen der Wärme an die Umgebung modelliert. Die Parametrierung des Filters 32 ist derart vorgenommen, dass der Verlauf des Ausgangssignals des Filters 32 dem Temperaturverlauf am Bremswiderstand entspricht. Abhängig vom Überschreiten oder Unterschreiten eines Schwellwertes erzeugt das Schaltglied 33 das Ansteuersignal für den Schalter 13. Dabei ist eine Schalthysterese berücksichtigt.

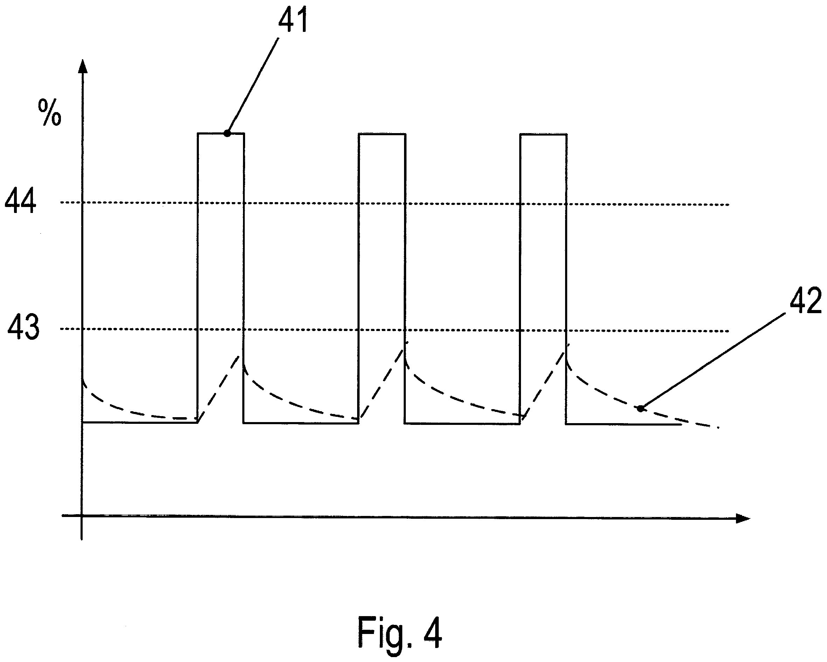

Wie in Figur 4 gezeigt, verläuft das modellierte Temperatursignal 42 abhängig vom Ansteuersignal 41 für den steuerbaren Schalter 13. Während der Zeitspannen, in welchen der Schalter geschlossen ist, steigt die Temperatur an, ansonsten fällt sie ab.

Bei dauerhaft geschlossenem Schalter 13 würde sich der Temperaturwert 43 einstellen, wenn die an den Bremswiderstand zugeführte mittlere Leistung dem Typenschildwert, also der Normvorgabe für Dauerbetrieb, entspricht.

Steigt die Temperatur jedoch bei Abführen von hohen elektrischen Leistungen über den Schwellwert 44 an, wird ein Fehlerzustand weitergemeldet und/oder vom Umrichtersystem angezeigt. Außerdem wird dann der Schalter 13 geöffnet, um den Bremswiderstand zu schützen.

Die Auswerteeinheit 11 ist mittels einer Kommunikationsschnittstelle 12, insbesondere HMI-Schnittstelle, parametrierbar. Somit sind die Parameter, insbesondere der die Zeitkonstante τ des parametrierbaren Filters 32 bestimmenden Parameter, einfach eingebbar. Vorzugsweise ist das Filter 32 ein PT1-filter, also ein Tiefpass.

### Bezugszeichenliste

1 AC/DC-Wandler, insbesondere steuerbarer Gleichrichter oder Wechselrichter
2 externer Bremswiderstand
3 Brücke, insbesondere Kurzschlussbrücke
4 interner Bremswiderstand
5 Optokoppler
6 Kapazität, insbesondere Zwischenkreiskondensator
7 Wechselrichter, insbesondere DC/AC-Wandler oder rückspeisefähiger DC/AC-Wandler
8 Elektromotor
9 Spannungserfassungsmittel
10 Stromerfassungsmittel
11 Auswerteeinheit
12 Kommunikationsschnittstelle, insbesondere HMI-Schnittstelle
13 steuerbarer Schalter, insbesondere Leistungsschalter
14 Wechselspannungsversorgungsnetz
20 Stromerfassungsmittel
30 lineares Reglerglied, insbesondere Integrierer umfassendes Reglerglied
31 Begrenzer
32 parametrierbares Filter
33 Schaltglied
41 Ansteuersignal für steuerbaren Schalter
42 Temperatursignal
43 Temperaturwert bei Dauerbetrieb
44 Schwellwert für Temperatursignal
50 Wärmeleitwiderstand
51 Wärmekapazität

P Leistung
K_I Proportionalitätskonstante
τ Zeitkonstante (tau)

## Patentansprüche

1. Umrichtersystem mit einem AC/DC-Wandler (1), insbesondere Gleichrichter, einem Zwischenkreis und einer Reihenschaltung aufweisend einen Bremswiderstand (4) und einen steuerbaren Schalter (13), wobei der gleichspannungsseitige Anschluss des AC/DC-Wandlers den Zwischenkreis und die dazu parallel geschaltete Reihenschaltung speist, insbesondere wobei der Reihenschaltung der gleichspannungsseitige Anschluss eines DC/AC-Wandlers, insbesondere Wechselrichters (7), parallel zugeschaltet ist, wobei, ein Spannungserfassungsmittel am gleichspannungsseitigen Anschluss angekoppelt ist, und wobei ein Ausgangssignal des Spannungserfassungsmittels (9) einer Auswerteeinheit (11) zugeführt wird, welche dazu eingerichtet ist, ein Ansteuersignal (41) für den steuerbaren Schalter (13) zu erzeugen, und wobei die Auswerteeinheit (11) ein Mittel zur Bestimmung der an den Bremswiderstand (4) bei geschlossenem steuerbaren Schalter (13) aus dem Zwischenkreis zugeführten elektrischen Leistung umfasst, und das Mittel dazu eingerichtet ist, die zugeführte elektrische Leistung aus dem Ausgangssignal des Spannungserfassungsmittels (9) zu bestimmen, **dadurch gekennzeichnet, dass** das Ausgangssignal des Mittels einem Regler, insbesondere einem linearen Regler, zugeführt wird, wobei für eine Zeitspanne eines geöffneten Zustands des steuerbaren Schalters (13) das Ausgangssignal des Mittels verschwindet, also den Wert Null aufweist, und wobei der Regler dazu eingerichtet ist, seinen Stellwert auf das Ausgangssignal des Mittels hin zu regeln, insbesondere wobei der Regler ein lineares Reglerglied (30), insbesondere PI-Reglerglieds oder Integrierglied, aufweist, dessen Stellwert, also dessen Ausgangssignal, einem Differenzbildner zur Bestimmung der Differenz zwischen dem Stellwert und dem Wert der elektrischen Leistung zugeführt wird,
wobei der Stellwert direkt oder über einen Begrenzer (31) einem parametrierbaren Filter (32), welcher ein thermisches Modell des Bremswiderstands (4) nachbildet, zugeführt wird, dessen Ausgangssignal einem Schaltglied (33) zugeführt wird, welches dazu eingerichtet ist, ein vom Überschreiten oder Unterschreiten eines Schwellwertes abhängiges Ausgangssignal (41) zum Öffnen oder Schließen des steuerbaren Schalters (13) zu erzeugen.

2. Umrichtersystem nach Anspruch 1,
**dadurch gekennzeichnet, dass**
der AC/DC-Wandler (1) ein steuerbarer Gleichrichter ist.

3. Umrichtersystem nach einem der vorangegangenen Ansprüche,
**dadurch gekennzeichnet, dass**
zur Bestimmung der an den Bremswiderstand (4) zugeführten elektrischen Leistung das Ausgangssignal **des Spannungserfassungsmittels (9)** einem Quadrierungsmittel für die Zeitspanne des geschlossenen Zustands des steuerbaren Schalters (13) zugeführt wird, dessen Ausgangssignal einem Mittel zur Multiplikation mit einem Widerstandswert des Bremswiderstands (4) zugeführt wird.

4. Umrichtersystem nach Anspruch 1 oder 2,
**dadurch gekennzeichnet, dass**
zur Bestimmung der an den Bremswiderstand (4) zugeführten elektrischen Leistung das Ausgangssignal des Spannungserfassungsmittels (9) und das Ausgangssignal eines Stromerfassungsmittel (10), welches den im Zwischenkreis fließenden Strom erfasst, für die Zeitspanne des geschlossenen Zustands des steuerbaren Schalters (13) einem Mittel zugeführt werden, dessen Ausgangssignal dem Produkt der Ausgangssignale des Spannungserfassungsmittel (9) und des Stromerfassungsmittels (10) entspricht, insbesondere also der elektrischen Leistung.

5. Umrichtersystem nach mindestens einem der vorangegangenen Ansprüche,
**dadurch gekennzeichnet, dass**
ein galvanisch entkoppeltes Stromerfassungsmittel, insbesondere Optokoppler (5), in der Reihenschaltung angeordnet ist,
dessen Ausgangssignal der Auswerteeinheit (11) zugeführt wird, wobei ein Vergleichsmittel der Auswerteeinheit (11) dazu eingerichtet ist, das Ausgangssignal auf unzulässig hohe Abweichungen zum zeitlichen Verlauf des für den steuerbaren Schalter (13) vorgesehenen Ansteuersignals (41) zu überwachen und davon abhängig eine Warnung oder einen Fehlerzustand anzuzeigen, zu melden oder weiterzuleiten.

6. Verfahren zum Betreiben eines Umrichtersystems, nach einem der vorangegangenen Ansprüche, wobei aus der am gleichspannungsseitigen Anschluss des DC/AC-Wandlers oder AC/DC-Wandlers (1) erfassten Spannung die an den Bremswiderstand (4) bei geschlossenem steuerbaren Schalter (13) zugeführte elektrische Leistung bestimmt wird, wobei bei geöffnetem steuerbaren Schalter (13) die an den Bremswiderstand (4) abgeführte elektrische Leistung verschwindet, **dadurch gekennzeichnet, dass** der zeitliche Verlauf der an den Bremswiderstand (4) abgeführten elektrischen Leistung einem Regler, insbesondere linearen Regler, zugeführt wird, der seinen Stellwert, insbesondere also sein Ausgangssignal, auf den zeitlichen Verlauf der an den Bremswiderstand (4) abgeführten elektrischen Leistung hinregelt, wobei der Stellwert des Reglers direkt oder über einen Begrenzer (31) einem parametrierbaren Filter (32), welcher ein thermisches Modell des Bremswiderstands (4) nachbildet, zugeführt wird, dessen Ausgangssignal einem Schaltglied (33) zugeführt wird, welches den steuerbaren Schalter (13) ansteuert, abhängig vom Überschreiten oder Unterschreiten eines Schwellwertes durch den Stellwert.

7. Verfahren nach mindestens einem der vorangegangenen Ansprüche,
**dadurch gekennzeichnet, dass**
das vom Schaltglied (33) erzeugte Ansteuersignal (41) auf unzulässig hohe Abweichungen vom in der Reihenschaltung, insbesondere im Bremswiderstand (4), erfassten Stromverlauf verglichen wird .

8. Verfahren nach mindestens einem der vorangegangenen Ansprüche,
**dadurch gekennzeichnet, dass**
das Filter derart parametriert wird, dass der zeitliche Verlauf des Ausgangssignals dem realen Temperaturverlauf entspricht.

## Claims

1. Converter system comprising an AC/DC converter (1), in particular a rectifier, a DC link and a series circuit having a braking resistor (4) and a controllable switch (13), the DC-voltage-side terminal of the AC/DC converter feeding the DC link and the series circuit connected in parallel therewith,
the DC-voltage-side terminal of a DC/AC converter, in particular an inverter (7), being in particular wired in parallel with the series circuit,
a voltage detection means being coupled to the DC-voltage-side terminal, and an output signal of the voltage detection means (9) being supplied to an evaluation unit (11) configured to generate an actuation signal (41) for the controllable switch (13), and
the evaluation unit (11) comprising a means for determining the electrical power supplied to the braking resistor (4) from the DC link when the controllable switch (13) is closed,
and the means being configured to determine the supplied electrical power from the output signal of the voltage detection means (9),
**characterised in that**
the output signal of the means is supplied to a controller, in particular a linear controller, the output signal of the means vanishing, i.e. having the value zero, for a time period when the controllable switch (13) is in an open state, and the controller being configured to adjust its manipulated variable to the output signal of the means,
the controller in particular having a linear controlling element (30), in particular a PI controlling element or integrating element, the manipulated variable, i.e. the output signal, of which is supplied to a subtractor to determine the difference between the manipulated variable and the value of the electrical power,
the manipulated variable being supplied, either directly or by means of a limiter (31), to a configurable filter (32) that simulates a thermal model of the braking resistor (4), the output signal of said filter being supplied to a switching member (33) configured to generate an output signal (41) for opening or closing the controllable switch (13), said signal being dependent on whether a value exceeds or falls below a threshold.

2. Converter system according to claim 1,
**characterised in that**
the AC/DC converter (1) is a controllable rectifier.

3. Converter system according to any of the preceding claims,
**characterised in that**
to determine the electrical power supplied to the braking resistor (4), the output signal of the voltage detection means (9) is supplied to a squaring means for the time period when the controllable switch (13) is in the closed state, the output signal of said squaring means being supplied to a means for multiplying by a resistance value of the braking resistor (4).

4. Converter system according to either claim 1 or claim 2,
**characterised in that**
to determine the electrical power supplied to the braking resistor (4), the output signal of the voltage detection means (9) and the output signal of a current detection means (10), which detects the current flowing in the DC link, are supplied, for the time period when the controllable switch (13) is in the closed state, to a means of which the output signal corresponds to the product of the output signals of the voltage detection means (9) and of the current detection means (10), in particular therefore to the electrical power.

5. Converter system according to at least one of the preceding claims,
**characterised in that**
a galvanically isolated current detection means, in particular an optocoupler (5), is arranged in the series circuit,
and its output signal is supplied to the evaluation unit (11), a comparison means of the evaluation unit (11) being configured to monitor the output signal for unacceptably high deviations from the temporal curve of the actuation signal (41) provided for the controllable switch (13), and to display, report or relay an alert or an error status on that basis.

6. Method for operating a converter system according to any of the preceding claims, the electrical power supplied to the braking resistor (4) when the controllable switch (13) is closed being determined from the voltage detected at the DC-voltage-side terminal of the DC/AC converter or AC/DC converter (1), the electrical power dissipated at the braking resistor (4) vanishing when the controllable switch (13) is open,
**characterised in that**
the temporal curve of the electrical power dissipated at the braking resistor (4) is supplied to a controller, in particular a linear controller, which adjusts its manipulated variable, in particular therefore its output signal, to the temporal curve of the electrical power dissipated at the braking resistor (4),
the manipulated variable of the controller being supplied, either directly or by means of a limiter (31), to a configurable filter (32) that simulates a thermal model of the braking resistor (4), the output signal of said filter being supplied to a switching member (33), which actuates the controllable switch (13) depending on whether the manipulated variable exceeds or falls below a threshold.

7. Method according to at least one of the preceding claims,
**characterised in that**
the actuation signal (41) generated by the switching member (33) is compared for unacceptably high deviations from the current curve detected in the series circuit, in particular in the braking resistor (4).

8. Method according to at least one of the preceding claims,
**characterised in that**
the filter is configured such that the temporal curve of the output signal corresponds to the actual temperature curve.

## Revendications

1. Système de variateur comportant un convertisseur AC/DC (1), en particulier un redresseur, un circuit intermédiaire et un circuit série présentant une résistance de freinage (4) et un commutateur commandable (13), la connexion côté tension continue du convertisseur AC/DC alimentant le circuit intermédiaire et le circuit série connecté en parallèle à celui-ci,
dans lequel, en particulier la connexion côté tension continue d'un convertisseur DC/AC, en particulier d'un onduleur (7), est connectée en parallèle au circuit série,
dans lequel un moyen de détection de tension est couplé à la connexion côté tension continue, et dans lequel un signal de sortie du moyen de détection de tension (9) est amené à une unité d'évaluation (1) qui est conçue pour générer un signal de commande (41) pour le commutateur commandable (13) et dans lequel l'unité d'évaluation (11) comprend un moyen pour déterminer la puissance électrique amenée à la résistance de freinage (4) à partir du circuit intermédiaire lorsque le commutateur commandable (13) est fermé,
et le moyen est conçu pour déterminer la puissance électrique amenée à partir du signal de sortie du moyen de détection de tension (9),
**caractérisé en ce que** le signal de sortie du moyen est amené à un régulateur, en particulier un régulateur linéaire, le signal de sortie du moyen disparaissant, c'est-à-dire présentant la valeur zéro, pendant une durée d'un état ouvert du commutateur commandable (13), et le régulateur étant conçu pour réguler sa valeur de réglage sur le signal de sortie du moyen, en particulier le régulateur présentant un élément régulateur linéaire (30), en particulier un élément régulateur PI ou un élément intégrateur, sa valeur de réglage, c'est-à-dire son signal de sortie, étant amenée à un élément de formation de différence pour déterminer la différence entre la valeur de réglage et la valeur de la puissance électrique, la valeur de réglage étant amenée directement ou par l'intermédiaire d'un limiteur (31) à un filtre paramétrable (32) qui simule un modèle thermique de la résistance de freinage (4), dont le signal de sortie est amené à un élément de commutation (33) qui est configuré pour générer un signal de sortie (41) servant à ouvrir ou fermer le commutateur commandable (13), lequel signal de sortie (41) dépend du dépassement ou non d'une valeur seuil.

2. Système de variateur selon la revendication 1, **caractérisé en ce que** le convertisseur AC/DC (1) est un redresseur commandable.

3. Système de variateur selon l'une des revendications précédentes,
**caractérisé en ce que**,
pour déterminer la puissance électrique amenée à la résistance de freinage (4), le signal de sortie du moyen de détection de tension (9) est amené à un moyen d'élévation au carré pendant la durée de l'état fermé du commutateur commandable (13), dont le signal de sortie est amené à un moyen de multiplication par une valeur de résistance de la résistance de freinage (4).

4. Système de variateur selon la revendication 1 ou 2,
**caractérisé en ce que**,
pour déterminer la puissance électrique amenée à la résistance de freinage (4), le signal de sortie du moyen de détection de tension (9) et le signal de sortie d'un moyen de détection de courant (10), qui détecte le courant circulant dans le circuit intermédiaire, sont amenés pendant la durée de l'état fermé du commutateur commandable (13) à un moyen dont le signal de sortie correspond au produit des signaux de sortie du moyen de détection de tension (9) et du moyen de détection de courant (10), c'est-à-dire en particulier à la puissance électrique.

5. Système de variateur selon au moins l'une des revendications précédentes,
**caractérisé en ce**
**qu'**un moyen de détection de courant découplé galvaniquement, en particulier un optocoupleur (5), est disposé dans le circuit série, dont le signal de sortie est amené à l'unité d'évaluation (11), un moyen de comparaison de l'unité d'évaluation (11) étant conçu pour surveiller le signal de sortie afin de détecter des écarts élevés non admissibles par rapport à la variation temporelle du signal de commande (41) prévu pour le commutateur commandable (13) et, en fonction de cela, afficher, signaler ou transmettre un avertissement ou un état de défaut.

6. Procédé de fonctionnement d'un système de variateur selon l'une des revendications précédentes,
dans lequel l'énergie électrique amenée à la résistance de freinage (4) lorsque le commutateur commandable (13) est fermé est déterminée à partir de la tension détectée à la connexion côté tension continue du convertisseur DC/AC ou du convertisseur AC/DC (1), la puissance électrique dissipée sur la résistance de freinage (4) disparaissant lorsque le commutateur commandable (13) est ouvert,
**caractérisé en ce que** la variation temporelle de la puissance électrique dissipée sur la résistance de freinage (4) est amenée à un régulateur, en particulier un régulateur linéaire, qui régule sa valeur de réglage, c'est-à-dire en particulier son signal de sortie, sur la variation temporelle de la puissance électrique dissipée sur la résistance de freinage (4),
la valeur de réglage du régulateur étant amenée directement ou par l'intermédiaire d'un limiteur (31) à un filtre paramétrable (32) qui simule un modèle thermique de la résistance de freinage (4), dont le signal de sortie est amené à un élément de commutation (33) qui commande le commutateur commandable (13) en fonction du dépassement ou non d'une valeur seuil par la valeur de réglage.

7. Procédé selon au moins l'une des revendications précédentes,
**caractérisé en ce que**
le signal de commande (41) généré par l'élément de commutation (33) est comparé afin de détecter des écarts élevés non admissibles par rapport à la variation de courant détectée dans le circuit série, en particulier dans la résistance de freinage (4).

8. Procédé selon au moins l'une des revendications précédentes,
**caractérisé en ce que**
le filtre est paramétré de telle sorte que la variation temporelle du signal de sortie correspond à la variation réelle de température.
